# EUROPEAN PATENT SPECIFICATION

(11) **EP 2 998 638 B1**
(45) Date of publication and mention of the grant of the patent: **17.01.2018**
(21) Application number: 15185634.1
(22) Date of filing: 17.09.2015
(51) Int. Cl.: F21K 9/27, F21V 3/02, F21V 5/00, F21V 5/04, F21V 7/00, G02B 19/00, F21Y 115/10, F21Y 103/10

(54) **METHOD AND SYSTEM FOR LED LAMP INCORPORATING INTERNAL OPTICS FOR SPECIFIC LIGHT DISTRIBUTION**
VERFAHREN UND SYSTEM FÜR LED-LAMPE MIT INTERNER OPTIK ZUR SPEZIFISCHEN LICHTVERTEILUNG
PROCÉDÉ ET SYSTÈME DE LAMPE DEL INCORPORANT DES ÉLÉMENTS OPTIQUES INTERNES DE DISTRIBUTION DE LUMIÈRE SPÉCIFIQUE

(30) Priority: 17.09.2014 US 201462051623 P; 11.09.2015 US 201514852454
(43) Date of publication of application: 23.03.2016
(73) Proprietor: GE Lighting Solutions, LLC, Cleveland, OH 44112 (US)
(72) Inventor: TORABIFARD, Mozhgan, Lachine, Québec H8T 3M6 (CA); REBMAN, Roderick Fitzgerald, Willoughby Hills, OH Ohio 44094 (US)
(74) Representative: Foster, Christopher Michael

(56) References cited:
- WO-A1-2014/005321
- US-A1- 2010 177 532
- US-A1- 2011 141 734
- US-A1- 2011 149 548
- US-A1- 2012 044 675
- US-A1- 2012 092 856
- US-A1- 2012 106 144

## Description

### BACKGROUND

Many tubular-shaped fluorescent lamps are known. Their omni-directional light distribution is favored by many people. Solid state light sources are increasingly being used to replace fluorescent lamps. However, solid state light sources typically project light in a relatively directional manner. While replacement for fluorescent lamps have been previously proposed, the light therefrom may typically produce lambertian photometry that may not be desired for some applications.

US20100177532A1 discloses light modifier for an LED producing light about a central axis is provided. The light modifier includes a lens defining an indentation. The indentation is angled relative to the central axis by an amount less than a complementary angle of a critical angle of the lens along the indentation. The lens can reduce the appearance of a bright spot created by the LED. US20110141734A1 discloses a lens to redirect light, having an angular distribution centered around a left-right symmetry plane (LRSP), from a light source. The lens includes an incident face, facing the light source, which includes an incident corner, which divides the incident face into incident inner and outer zones and is concave, forming an obtuse angle in air.

Therefore, it would be desirable to provide improved methods and apparatus for providing a replacement lamp having a solid state light source that substantially provides a light distribution efficient for different applications.

Therefore the present invention relates to a lighting apparatus according to claim 1.

### BRIEF DESCRIPTION OF THE DRAWINGS

Features and advantages of some embodiments of the present invention, and the manner in which the same are accomplished, will become more readily apparent upon consideration of the following detailed description of the invention taken in conjunction with the accompanying drawings, wherein:
FIG. 1 is an illustrative cross-sectional view of a tube lamp having a LED light engine;
FIG. 2 is an optical distribution chart, corresponding to the lamp of FIG. 1;
FIG. 3 is an illustrative cross-sectional view of a tube lamp having internal optics, in accordance with some embodiments herein;
FIG. 4 is an optical distribution chart, corresponding to the lamp of FIG. 3;
FIGS. 5 is a side elevation view of a lamp, according to some embodiments herein;
FIG. 6 is a perspective view of a portion of a TIR lens for a lamp, in accordance with some embodiments herein;
FIG. 7 is a detailed perspective view of a portion of a lamp, in accordance with some embodiments herein;
FIGS. 8 and 9 are optical distribution charts for lamps with different tube diffusers, according to some embodiments herein;
FIG. 10 is a detailed cross-sectional view of a tube lamp having internal optics, according to one embodiment herein;
FIG. 11 is a cross-sectional view of a tube lamp having internal optics, according to some embodiments herein;
FIG. 12 is a perspective view of the tube lamp of FIG. 11, according to some embodiments herein;
FIGS. 13 and 14 are optical distribution charts for the FIG. 11 lamp with different tube diffusers, according to some embodiments herein;
FIG. 15 is a detailed cross-sectional view of the tube lamp of FIG. 11, according to some embodiments herein;
FIG. 16 is an optical distribution chart for a lamp of some embodiments herein;
FIGS. 17 and 18 are plan views of an environment for an application of the lamps of some embodiments herein;
FIG. 19 is a tabular listing of observed results corresponding to some lamps, in accordance with some embodiments herein; and
FIGS. 20 and 21 are a graphical presentations of some of the observed results disclosed in the table of FIG. 19.

### DETAILED DESCRIPTION

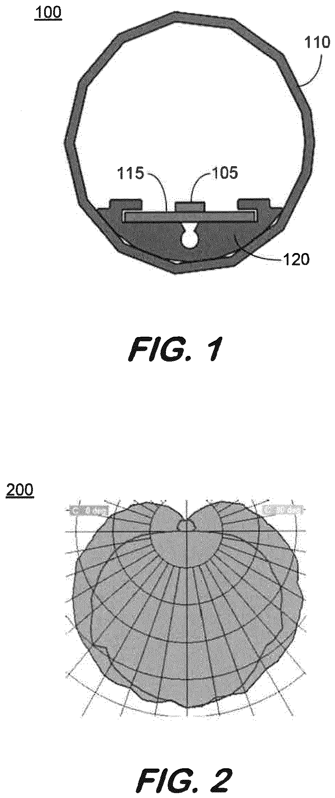

FIG. 1 is an illustrative diagram of a cross-sectional view of a conventional LED tube lamp 100. The lamp shown in FIG. 1 may be designated as a replacement of a T8 fluorescent lamp based on its construction and configuration, as understood by those knowledgeable and skilled in the art of lighting. Lamp 100 is an illustrative depiction of a known replacement fluorescent tube lamp. Lamp 100 includes a tube-shape diffuser 110, a light emitting diode (LED) light source 105 that is connected to a printed circuit board (PCB) 115. PCB 115 is supported by a heat dissipating structure or heat sink 120. LED 110, PCB 115, and heat sink 120 are located against an interior surface of diffuser wall 110 in a lower or bottom portion of the lamp, given the orientation of lamp 100.

Light from LED 105 may typically be distributed in a pattern as depicted in the distribution chart 200 of FIG. 2. In particular, the light from LED 105 generally travels in straight paths toward diffuser wall 110, exits, and distributes in, roughly, a lambertian pattern. In some aspects, a LED T8 replacement lamp with Lambertian photometry is not an efficient solution for some applications. This may be due to the produced light distribution having light in an area where it is not needed/desired, not being uniform on the horizontal plane including the light source, and, for example, not providing enough light for higher shelves in some applications.

The light distribution of lamp 100 as depicted in FIG. 2 may be acceptable and even desired in some contexts and use-cases. However, different applications and use-cases may warrant different light distributions where, for example, the light output by a lamp is distributed in specific, desired direction(s) that are efficient for a given application.

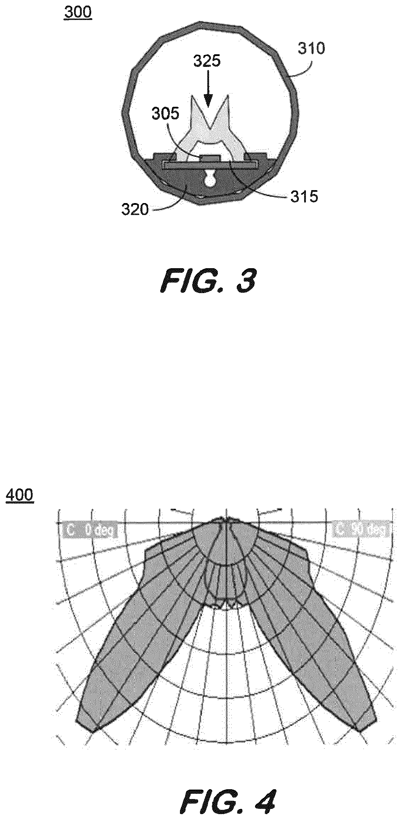

FIG. 3 is a cross-sectional view of a tube lamp 300 having internal optics, according to some embodiments herein. Lamp 300 includes a solid state light source 305 (e.g., a LED or LED array), a tubular-shape diffuser 310, a PCB 315 supporting the LED array and providing electrical connections to an electrical energy source for energizing the LEDs of the LED array, and a heat sink 320 in thermal communication with PCB 315. As oriented, LED 305, PCB 315, and heat sink 320 are positioned at or near the bottom of the interior of diffuser 310. Lamp 300 further includes an optics mechanism 325. Optics mechanism 325, in some embodiments, is a linear extrusion lens incorporating total internal reflection (TIR) and refractive mechanisms disposed within diffuser 310. In some aspects, the combination of the TIR lens 325 and the diffuser 310 cooperate to produce or provide a particular, designed light distribution output. In some embodiments, a particular (i.e., predetermined) desired photometry may be achieved by virtue of and based on the combination of a customized linear extrusion lens incorporating TIR and refractive (i.e., multiple) mechanisms, and a diffuser of particular material compositions having particular reflection and/or refraction characteristics.

In some aspects, optics mechanism 325 shown in FIG. 3 may generally be described as including two protrusions on a distal side of LED 305. Each of the two protrusions has, roughly, a triangular cross-sectional shape, as depicted in FIG. 3.

FIG. 4 is an illustrative depiction of the light distribution chart 400 for the LED T8 lamp of FIG. 3 having the TIR lens 325 incorporating TIR and refractive (i.e., multiple) mechanisms and a clear diffuser tube 310. In some aspects, diffuser tube 310 (like other diffuser tubes herein unless specifically stated as being otherwise) may be constructed of glass, an extruded polycarbonate, and other materials. By using a TIR lens as disclosed herein, the light emitted from LED light source 305 may be refracted or reflected by TIR lens 325 instead of passing directly though tube diffuser 310. TIR lens 325 may bend the produced light to different angles. Designing the certain TIR lens(es) herein and adjusting the diffusion of tube(s) herein may result in the desired photometry. For example, embodiments may use a TIR lens that bends the output light to higher angles with a relatively weak diffusion material for tube. With such lamps, some of the centrally produced light may be distributed at a higher angle as shown in the light distribution chart 400 of FIG. 4. FIG. 4 shows a representation of a bat-wing photometry instead of Lambertian. In some embodiments, the angle(s) for bat-wings and narrowness (i.e., width) of the produced photometry may be changed by changing the TIR design and diffuser tube composition materials depending, at least in part, on the desired application. These combination(s) of changes may help to increase an application efficiency for the end-users of the lamps herein. For example, a bat-wing distribution may be a desired photometry in an office environment and a retail area where such a photometry may provide uniform light intensity on a work plane and more vertical foot-candles, Fc, on shelves of the retail space. In some embodiments, a narrow bat-wing will provide more Fc on horizontal plane(s).

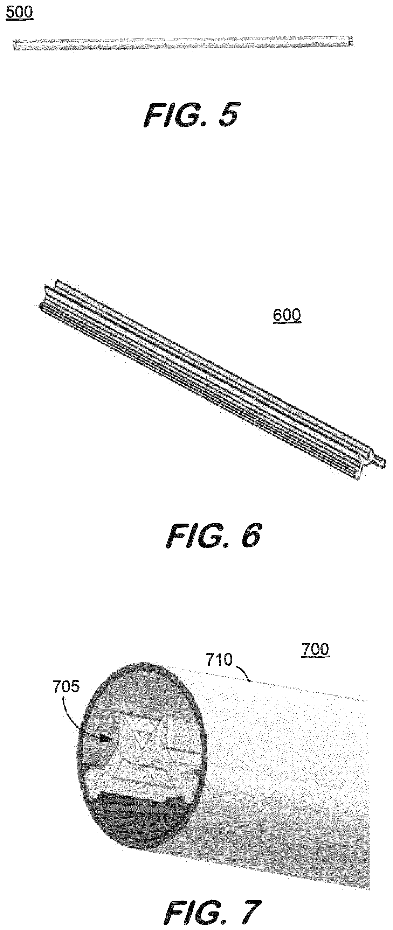

FIG. 5 is an illustrative depiction of a diffuser tube 500, according to some embodiments herein. The diffuser tube may be constructed of various materials, including but not limited to glass, ceramics, polycarbonates, and other man-made and naturally occurring compositions. These and other materials may be manufactured and/or shaped into the configuration of diffuser tube by a variety of manufacturing techniques and processes, including moldings, extracting, casting, etc. Diffuser 500 may be produced to have dimensions similar to (pre)existing light fixtures and/or light fixture installations. In some embodiments, diffuser 500 may have a diameter and length similar to a "T8" lamp.

FIG. 6 is an illustrative depiction of a TIR lens (i.e., optics) 600 incorporating TIR and refractive (i.e., multiple) mechanisms that may be disposed within a diffuser tube herein. TIR lens 600 may be constructed of materials and configured into a shape that will, when it is disposed within and used in combination with a diffuser tube herein (e.g., diffuser tube 500), produces a desired, predetermined light distribution.

FIG. 7 is an illustrative depiction of a lamp 700 having a TIR lens 705 incorporating TIR and refractive (i.e., multiple) mechanisms disposed within a diffuser tube 710. The TIR lens is disposed above an array of LEDs (one LED shown in FIG. 7 though not labeled with a reference number for sake of clarity of the drawing) and shapes the light rays therefrom based on the characteristics thereof (e.g., construction materials, shape of the lens, dimension of the lens, distance between TIR lens and LEDs, distance between the TIR lens and the diffuser tube, etc.).

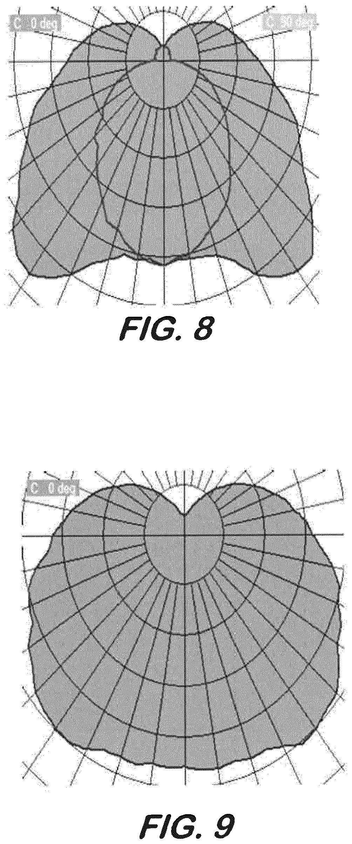

FIGS. 8 and 9 are optical distribution charts for lamps with different tube diffusers, according to some embodiments herein. In a present example, the lamp may generally correspond to the lamp of FIGS. 3 and 7. FIG. 8 is a representation of the light distribution with the LED T8 lamp of FIGS. 3 and 7 having a clear diffuser tube and FIG. 9 is a representation of the light distribution obtained with the LED T8 lamp of FIGS. 3 and 7 having a relatively weak diffusing tube.

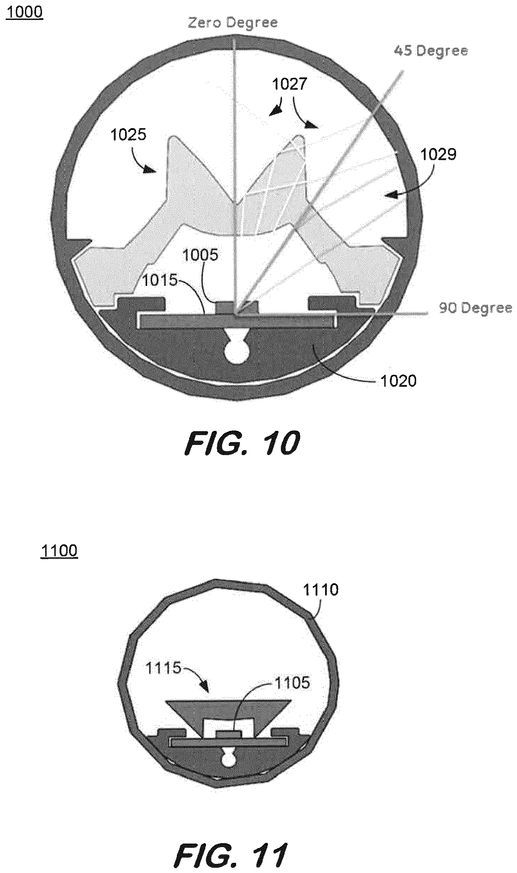

FIG. 10 is a detailed cross-sectional view of a tube lamp 1000 having internal optics 1025, according to one embodiment herein. In this embodiment, LED T8 lamp 1000 includes TIR lens 1025 incorporating TIR and refractive (i.e., multiple) mechanisms disposed within diffuser 1010 and above LED 1005. LED 1005 is supported by PCB 1015 where a heat sink/support structure 1020 further supports and dissipates heat from the PCB. The extruded TIR lens 1025 of this embodiment is inside LED T8 Tube and may be designed for a particular application or use-case. TIR lens 1025 may generally be viewed as an optic incorporating multiple optical mechanisms and/or manipulating surfaces within a unitary component that may have, for example, two or more divisions or portions for controlling the light that is incident thereto. For example, TIR lens 1025 is designed to use refraction for the light emitted from LED from about zero degrees to 45 degrees (e.g., light rays 1027) and to use total internal reflection for light rays above about 45 degrees (e.g., light rays 1029). TIR lens 1025 is designed to direct both of these portions of the light from LED 1005 to about 20 degrees - about 30 degrees, per a particular embodiment application. Like the optics 325 of FIG. 3, TIR lens 1025 shown in FIG. 10 may generally be described as including two protrusions on a distal side of LED 1005. Each of the two protrusions has, roughly, a triangular cross-sectional shape, as depicted in FIG. 10.

FIG. 11 is a cross-sectional view of a LED T8 lamp 1100 having internal optics 1115 and a LED (or other solid state) light source engine 1005 disposed within a diffuser tube 1110, according to some embodiments herein. The configuration of TIR lens 1105 incorporates TIR and refractive (i.e., multiple) mechanisms and may be designed to produce a particular, desired photometry. In some aspects, optics mechanism 1115 shown in FIG. 11 may generally be described as including two protrusions on a distal side of LED 1105. Each of the two protrusions has, roughly, an inverted triangular cross-sectional shape where the inverted triangular protrusions are joined together by a linear center portion above LED 1005, as depicted in FIG. 11.

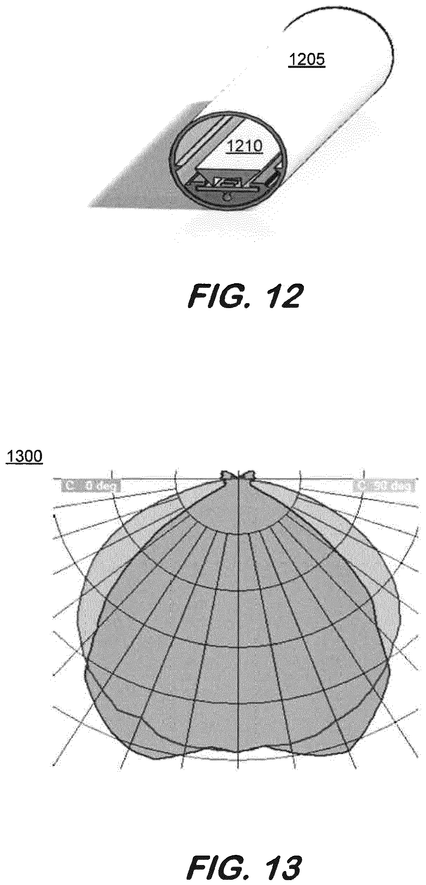

FIG. 12 is a perspective view of the LED T8 tube lamp of FIG. 11, according to some embodiments herein. FIG. 12 shows diffuser tube 1205 housing TIR lens 1210 and other components. The other components are not separately referenced for sake of clarity of the drawing.

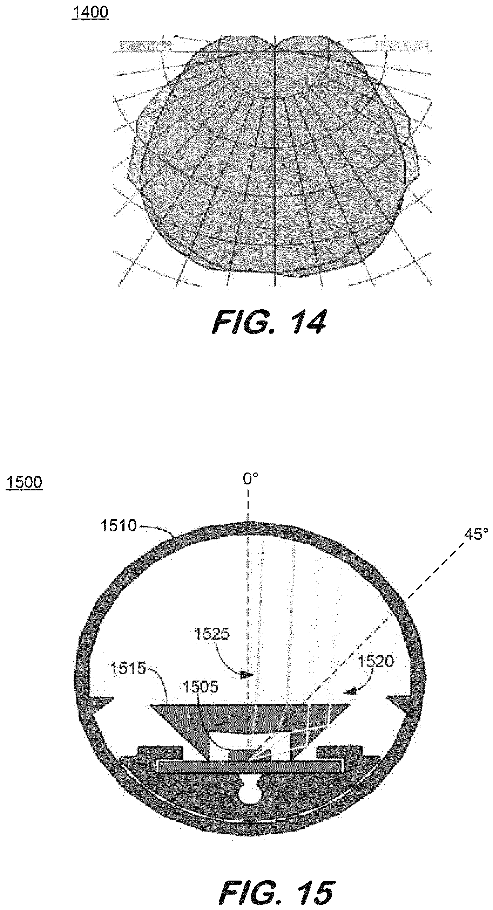

FIGS. 13 and 14 are representative optical distribution charts for lamp 1100 of FIG. 11, with different tube diffusers, according to some embodiments herein. FIG. 13 is a representative light distribution chart 1300 for the LED T8 lamp 1100 having the shown TIR lens and a clear diffuser tube. FIG. 14 is a representative light distribution chart 1400 for the LED T8 lamp 1100 having the shown TIR lens and a relatively weak diffusing tube.

FIG. 15 is a detailed cross-sectional view of the tube lamp of FIGS. 11 and 12, according to some embodiments herein. FIG. 15 is a detailed cross-sectional view of a tube lamp 1500 having internal optics 1515, according to one embodiment herein. In this embodiment, LED T8 lamp 1500 includes TIR lens 1515 disposed within diffuser 1510 and above LED 1505. LED 1505 is supported by a PCB where a heat sink/support structure further supports and dissipates heat from the PCB. The extruded TIR lens 1515 of this embodiment is inside LED T8 Tube and may be designed for a particular application or use-case. TIR lens 1515 may generally be viewed as an optic incorporating multiple optical mechanisms and/or manipulating surfaces within a unitary component having two divisions or portions for controlling the light that is incident thereto. For example, TIR lens 1515 is designed to use refraction for the light emitted from the LED from about zero degrees to 45 degrees (e.g., light rays 1525) and to use total internal reflection for light rays above about 45 degrees (e.g., light rays 1520). TIR lens 1515 is designed to collimate the light output from LED,as shown in FIG. 15. Similar to FIG. 11, optics mechanism 1515 shown in FIG. 15 may generally be described as including two protrusions on a distal side of LED 1505. Each of the two protrusions has, roughly, an inverted triangular cross-sectional shape where the inverted triangular protrusions are joined together by a linear center portion above LED 1505, as depicted in FIG. 15.

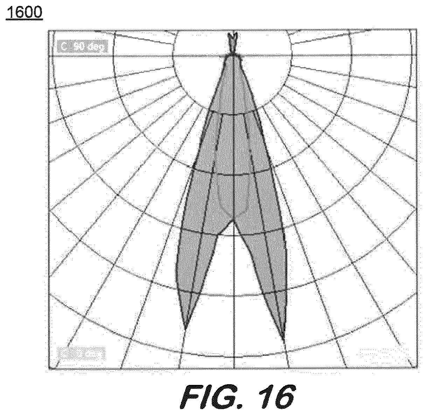

FIG. 16 is an optical distribution chart 1600 for a lamp of some embodiments herein. FIG. 16 illustrates the photometry that is produced by the TIR lens inside the LED T8 lamp of, for example, FIG. 15. This TIR directs light to about 10 degrees both sides of the zero degree reference.

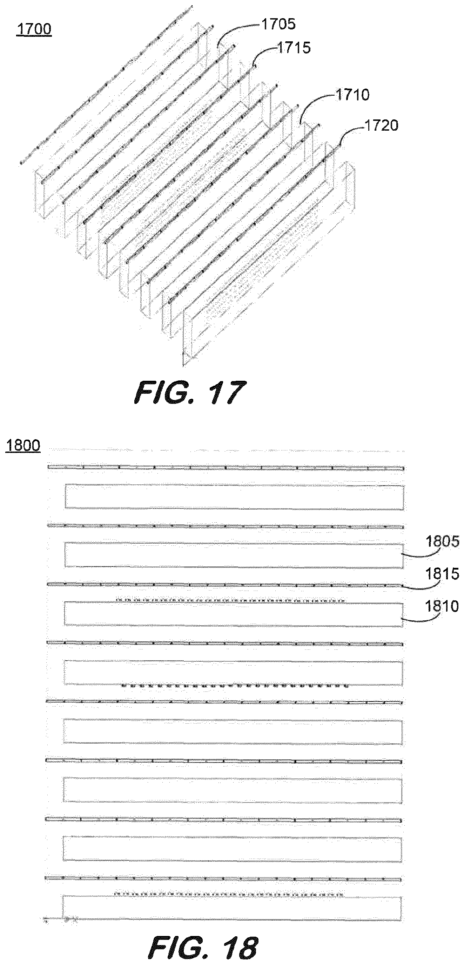

FIGS. 17 and 18 are plan views of an environment for an application of the lamps of some embodiments herein. In particular, FIG. 17 is a plan view of a room 1700 such as a warehouse having multiple shelves 1705 and 1710. In between the shelves and mounted to the ceiling of the room are light fixtures (e.g., 1715 and 1720) in accordance with some embodiments herein. The light fixtures have a TIR lens internal to the LED T8 lamp thereof and a diffuser tube that cooperates to provide light in a distribution pattern that is particularly designed to illuminate the face of the shelves that may hold various items. FIG. 18 is an overhead view 1800 of room 1700 or the like and includes shelves 1805 and 1810 with a lamp 1815 mounted to the ceiling of the room in between the shelves. The room shown in FIG. 18 includes additional shelves and light fixtures.

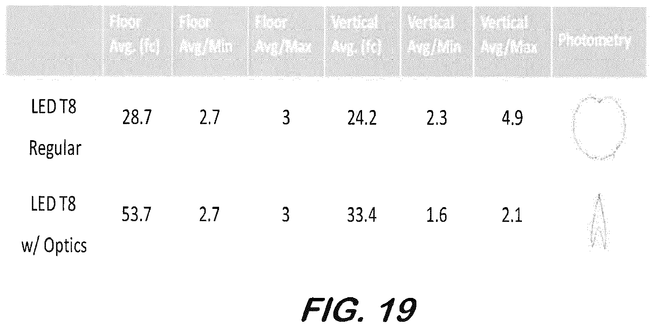

FIG. 19 is a summary table of photometric results obtained in a simulation of the described embodiments. The baseline is a standard T8 lamp (denoted as "LED T8 Regular" in FIG. 19) and is compared to a lamp incorporating the optics described herein (denoted "LED T8 w/ Optics" in FIG. 19). Each of these lamps were placed in shelving areas similar to the applications herein. The "Floor Avg." column depicts horizontal illumination in foot-candles (fc) for the plane directly below the lamps. By incorporating the disclosed optics and subsequently narrowing the output of the lamp, the horizontal illuminance increases from 28.7 fc to 53.7 fc. This represents a large increase in application efficiency for the same given output. Simulated readings across the entire plane are seen to show the same consistency, as described by the ratio of "Floor Avg/Min and "Floor Avg/Max" illuminance. In short, the light levels observed on the floor can be described as substantially higher (desirable) for the same output. The vertical illuminance ("Vertical Avg.") shows a very similar result. Vertical illuminance corresponds to light levels in a vertical plane lying on the face of the shelves. Simulated across the face of the shelves, vertical illuminance was found to increase from 24.2 fc to 33.4 fc. The consistency of the light level (Vertical avg/min, Vertical avg/max) has been drastically reduced, implied by the lower ratios. Essentially the dim areas of the shelves are better illuminated with respect to the average illuminance seen across the entire shelving unit.

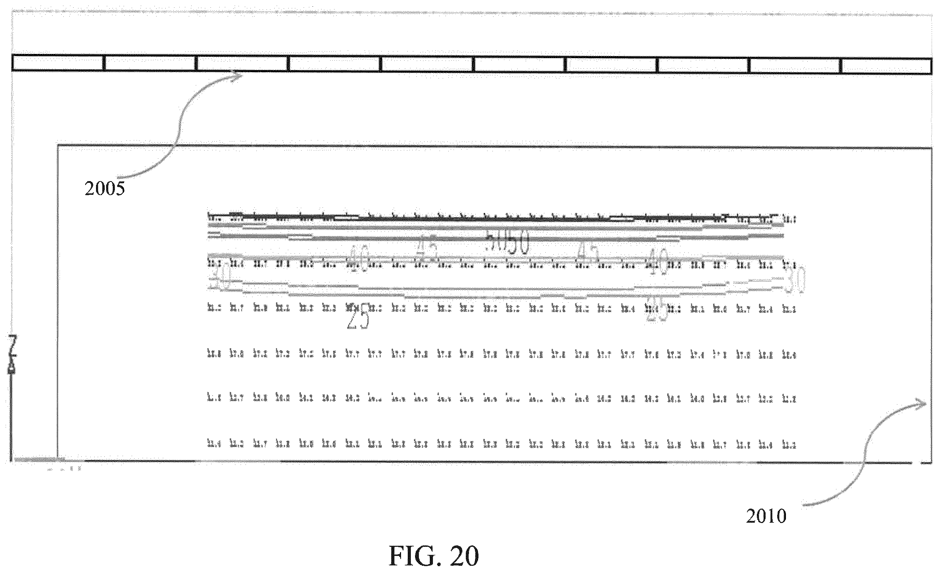

FIG. 20 is a map of vertical illuminance values as simulated for a standard output T8 without incorporating the optics disclosed herein (i.e., baseline). Here, the black boxes 2005 would be the lamps pointing downward from the ceiling (right in the figure). The ground or floor would correspond to the 2010 at the far right. Isolines depicting the 50, 45,40,25,20, and 15 foot-candle levels are drawn, ranging from around 5 feet (50 FC) to about 2 feet (15FC) from the ground. Observed levels are seen to decrease further down the shelf face as the light approaches the ground. This entire map may be used to calculate the vertical illuminance values displayed in Fig 19.

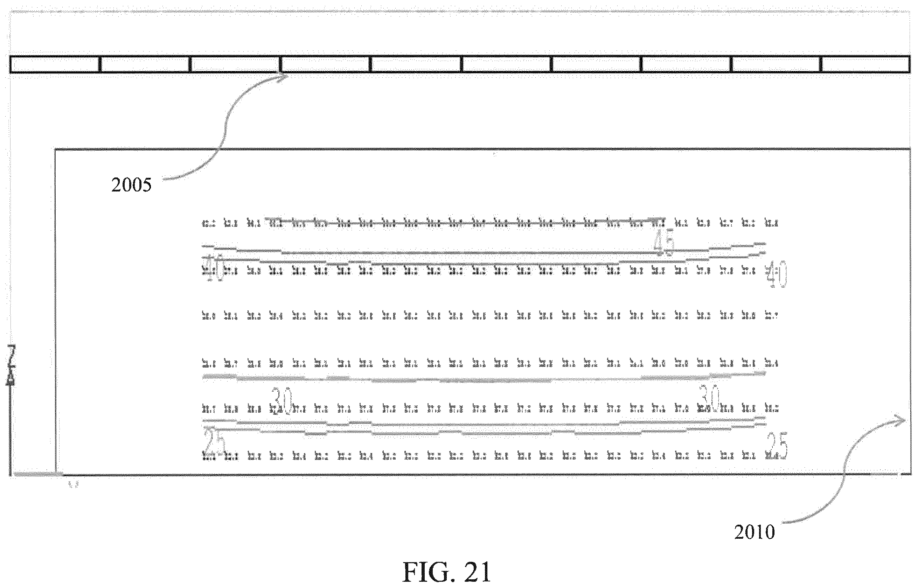

FIG. 21 is a map of vertical illuminance values for a similar simulation as represented in FIG. 20 but incorporating the optics disclosed herein (e.g., a LED T8 lamp with the disclosed optics). Isolines are shown for the 45, 40, 35, 30, and 25 FC light levels. Similarly, these range from around 2 feet to about 5 feet from the ground.

Together, FIGS. 20 and 21 illustrate, at least in part, some aspects of the utility of including the optics herein in, for example, a LED T8 . In the baseline case, a sharp gradient is observed with a "hot-spot" (i.e., high illuminance) observed substantially off the floor and a relatively dim area near the base of the shelves.

In some embodiments, lamps incorporating the optics described herein produce a distribution that (simulated) decrease the illuminance values at higher distances from the floor, reducing "hot-spots" while simultaneously increasing the light levels in the formerly dim areas near the floor. This represents a more consistent illumination (as described in the avg/min and avg/max ratio) without dim portions that is desirable in many applications of interest. It should be noted that this behavior can be predicted mathematically for any lighting system that matches the distribution shown for the LED T8 w/ optics. That is, a person of ordinary skill in the art may be able to fabricate the optic necessary from the description herein, together with the light distribution pattern, without any undue experimentation.

Embodiments have been described herein solely for the purpose of illustration. Persons skilled in the art will recognize from this description that embodiments are not limited to those described, but may be practiced with modifications and alterations limited only by the scope of the appended claims.

## Claims

1. An apparatus comprising:
a diffuser (310) defining an enclosed area within an interior of the diffuser (310);
a solid state light source (305), disposed within the interior of the diffuser (310), emitting light therefrom in a direction away from a horizontal plane containing the solid state light source (305); and
optics (325) disposed within the interior of the diffuser (310) adjacent to and above the solid state light source (305) to reflect, utilizing total internal reflection (TIR) and refractive mechanisms, at least a portion of the light emitted from the solid state light source (305),
**characterised in that** the optics (325) comprises a first protrusion on a distal side of the solid state light source (305), the first protrusion having a triangular cross-sectional shape; a second protrusion on a distal side of the solid state light source (305) opposing the first protrusion and forming a juncture with the first protrusion above the solid state light source (305), the second protrusion having a triangular cross-sectional shape; and protrusions having a planar cross-sectional shape and supporting the first and second protrusions above the solid state light source (305), wherein the protrusions supporting the first and second protrusions above the solid state light source (305) include the refractive mechanisms.

2. The apparatus of claim 1, further comprising a printed circuit board (315), wherein the solid state light source (305) is electrically coupled to the printed circuit board (315).

3. The apparatus of claim 1 or 2, wherein the solid state light source (305) comprises a plurality of solid state light sources.

4. The apparatus of any of claims 1 to 3, wherein the diffuser (310) is tube-shaped.

5. The apparatus of any of claims 1 to 4, wherein the diffuser (310) is elongated, and the optics (325) extends substantially a length of the diffuser (310).

6. The apparatus of any preceding claim, wherein the optics (325) comprise a unitary component.

7. The apparatus of any preceding claim, wherein the first and second protrusions include the TIR mechanisms (325).

8. The apparatus of any preceding claim, wherein the juncture comprises a vertex of less than about 180 degrees.

9. The apparatus of any preceding claim, wherein the first and second protrusions utilize total internal reflection to direct light emitted from the solid state light source (1005) with an angle from about zero degrees to about forty-five degrees and the protrusions supporting the first and second protrusions above the solid state light source (1005) utilize refraction to direct light emitted from the solid state light source (1005) with an angle greater than about forty-five degrees, wherein a value for the angles is measured with respect to a reference angle of zero degrees that is perpendicular to a horizontal plane containing the solid state light source (1005).

10. The apparatus of any preceding claim, wherein the apparatus shapes, during an operation thereof, light emitted by the solid state light source (305) based on at least one of a shape of the optics (325), materials of construction for the optics (325), dimensions of the optics (325), materials of construction for the diffuser (310), a distance between the optics (325) and the solid state light source (305), a distance between the optics (325) and the diffuser (310), and combinations thereof.

11. The apparatus of any preceding claim, further comprising a heat sink (320) disposed within the interior of the diffuser.

12. The apparatus of any preceding claim, wherein the solid state light source is a light emitting diode.

13. The apparatus of any preceding claim, wherein the diffuser is constructed of at least one of a glass, a ceramic, and a polycarbonate and/or the optics is constructed of at least one of a glass and a polycarbonate.

## Patentansprüche

1. Eine Vorrichtung, umfassend:
einen Diffusor (310), der einen umschlossenen Bereich in einem Inneren des Diffusors (310) definiert;
eine Festkörperlichtquelle (305), die im Inneren des Diffusors (310) angeordnet ist und Licht in einer Richtung weg von einer horizontalen Ebene, die die Festkörperlichtquelle (305) enthält, daraus emittiert; und
eine Optik (325), die im Inneren des Diffusors (310) der Festkörperlichtquelle (305) benachbart und über dieser angeordnet ist, um unter Ausnutzung von Mechanismen der totalen internen Reflexion (TIR) und der Refraktion mindestens einen Teil des von der Festkörperlichtquelle (305) emittierten Lichts zu reflektieren,
**dadurch gekennzeichnet, dass** die Optik (325) umfasst: einen ersten Vorsprung auf einer distalen Seite der Festkörperlichtquelle (305), wobei der erste Vorsprung eine Form mit Dreiecksquerschnitt aufweist; einen zweiten Vorsprung auf einer distalen Seite der Festkörperlichtquelle (305), der dem ersten Vorsprung gegenüberliegt und über der Festkörperlichtquelle (305) eine Verbindungsstelle mit dem ersten Vorsprung bildet,
wobei der zweite Vorsprung eine Form mit Dreiecksquerschnitt aufweist; und Vorsprünge, die eine planare Querschnittsform aufweisen und den ersten und den zweiten Vorsprung über der Festkörperlichtquelle (305) stützen, wobei die Vorsprünge, die den ersten und den zweiten Vorsprung über der Festkörperlichtquelle (305) stützen, die Refraktionsmechanismen enthalten.

2. Die Vorrichtung nach Anspruch 1, ferner eine Leiterplatte (315) umfassend, wobei die Festkörperlichtquelle (305) elektrisch mit der Leiterplatte (315) verbunden ist.

3. Die Vorrichtung nach Anspruch 1 oder 2, wobei die Festkörperlichtquelle (305) eine Mehrzahl von Festkörperlichtquellen umfasst.

4. Die Vorrichtung nach Anspruch 1 bis 3, wobei der Diffusor (310) rohrförmig ist.

5. Die Vorrichtung nach Anspruch 1 bis 4, wobei der Diffusor (310) länglich ist und die Optik (325) sich im Wesentlichen in einer Länge des Diffusors (310) erstreckt.

6. Die Vorrichtung nach einem vorhergehenden Anspruch, wobei die Optik (325) eine Einheitskomponente umfasst.

7. Die Vorrichtung nach einem vorhergehenden Anspruch, wobei der erste und der zweite Vorsprung die TIR-Mechanismen (325) enthält.

8. Die Vorrichtung nach einem vorhergehenden Anspruch, wobei die Verbindungsstelle einen Scheitel von weniger als 180 Grad umfasst.

9. Die Vorrichtung nach einem vorhergehenden Anspruch, wobei der erste und der zweite Vorsprung die totale interne Reflexion ausnutzen, um von der Festkörperlichtquelle (1005) emittiertes Licht mit einem Winkel von ca. null Grad bis ca. fünfundvierzig Grad zu lenken, und die Vorsprünge, die den ersten und den zweiten Vorsprung über der Festkörperlichtquelle (1005) stützen, die Refraktion ausnutzen, um von der Festkörperlichtquelle (1005) emittiertes Licht mit einem Winkel größer als ca. fünfundvierzig Grad zu lenken, wobei ein Wert für die Winkel bezüglich eines Referenzwinkels von null Grad gemessen wird, der senkrecht zu einer horizontalen Ebene steht, die die Festkörperlichtquelle (1005) enthält.

10. Die Vorrichtung nach einem vorhergehenden Anspruch, wobei die Vorrichtung während eines Betriebs derselben von der Festkörperlichtquelle (305) emittiertes Licht auf der Grundlage mindestens eines von einer Form der Optik (325), Baumaterialien der Optik (325), Abmessungen der Optik (325), Baumaterialien des Diffusors (310), einem Abstand zwischen der Optik (325) und der Festkörperlichtquelle (305), einem Abstand zwischen der Optik (325) und dem Diffusor (310) und Kombinationen davon formt.

11. Die Vorrichtung nach einem vorhergehenden Anspruch, ferner eine Wärmesenke (320) umfassend, die im Inneren des Diffusors angeordnet ist.

12. Die Vorrichtung nach einem vorhergehenden Anspruch, wobei die Festkörperlichtquelle eine Leuchtdiode ist.

13. Die Vorrichtung nach einem vorhergehenden Anspruch, wobei der Diffusor aus mindestens einem von einem Glas, einer Keramik und einem Polykarbonat gebaut ist und/oder die Optik aus mindestens einem von einem Glas und einem Polykarbonat gebaut ist.

## Revendications

1. Appareil comprenant :
un diffuseur (310) définissant une zone fermée à l'intérieur du diffuseur (310) ;
une source de lumière à semi-conducteur (305), disposée à l'intérieur du diffuseur (310), émettant de la lumière à partir de celui-ci dans une direction éloignée d'un plan horizontal contenant la source de lumière à semi-conducteur (305) ; et
des éléments optiques (325) disposés à l'intérieur du diffuseur (310) de manière adjacente et au-dessus de la source de lumière à semi-conducteur (305) pour réfléchir, en utilisant des mécanismes de réflexion interne totale (TIR) et de réfraction, au moins une partie de la lumière émise par la source de lumière à semi-conducteur (305),
**caractérisé en ce que** les éléments optiques (325) comprennent une première saillie sur un côté distal de la source de lumière à semi-conducteur (305), la première saillie ayant une forme de section transversale triangulaire ; une deuxième saillie sur un côté distal de la source de lumière à semi-conducteur (305), s'opposant à la première saillie, et formant une jonction avec la première saillie au-dessus de la source de lumière à semi-conducteur (305), la deuxième saillie ayant une forme de section transversale triangulaire ; et des saillies ayant une forme de section transversale plane et supportant les première et deuxième saillies au-dessus de la source de lumière à semi-conducteur (305), où les saillies supportant les première et deuxième saillies au-dessus de la source de lumière à semi-conducteur (305) comprennent les mécanismes de réfraction.

2. Appareil selon la revendication 1, comprenant en outre une carte de circuit imprimé (315), où la source de lumière à semi-conducteur (305) est couplée électriquement à la carte de circuit imprimé (315).

3. Appareil selon la revendication 1 ou la revendication 2, dans lequel la source de lumière à semi-conducteur (305) comprend une pluralité de sources de lumière à semi-conducteur.

4. Appareil selon l'une quelconque des revendications 1 à 3, dans lequel le diffuseur (310) a une forme de tube.

5. Appareil selon l'une quelconque des revendications 1 à 4, dans lequel le diffuseur (310) est allongé, et les éléments optiques (325) prolongent sensiblement une longueur du diffuseur (310).

6. Appareil selon l'une quelconque des revendications précédentes, dans lequel les éléments optiques (325) comprennent un composant unitaire.

7. Appareil selon l'une quelconque des revendications précédentes, dans lequel les première et deuxième saillies comprennent les mécanismes de TIR (325).

8. Appareil selon l'une quelconque des revendications précédentes, dans lequel la jonction comprend un sommet inférieur à environ 180 degrés.

9. Appareil selon l'une quelconque des revendications précédentes, dans lequel les première et deuxième saillies utilisent la réflexion interne totale pour diriger la lumière émise par la source de lumière à semi-conducteur (1005) avec un angle allant d'environ zéro degré à environ quarante-cinq degrés, et les saillies supportant les première et deuxième saillies au-dessus de la source de lumière à semi-conducteur (1005) utilisent la réfraction pour diriger la lumière émise par la source de lumière à semi-conducteur (1005) avec un angle supérieur à environ quarante-cinq degrés, où une valeur pour les angles est mesurée par rapport à un angle de référence de zéro degré qui est perpendiculaire à un plan horizontal contenant la source de lumière à semi-conducteur (1005).

10. Appareil selon l'une quelconque des revendications précédentes, dans lequel l'appareil met en forme, pendant son fonctionnement, la lumière émise par la source de lumière à semi-conducteur (305) sur la base d'au moins un paramètre parmi les suivants : la forme des éléments optiques (325), les matériaux de construction des éléments optiques (325), les dimensions des éléments optiques (325), les matériaux de construction pour le diffuseur (310), une distance entre les éléments optiques (325) et la source de lumière à semi-conducteur (305), une distance entre les éléments optiques (325) et le diffuseur (310), et des combinaisons de ceux-ci.

11. Appareil selon l'une quelconque des revendications précédentes, comprenant en outre un dissipateur thermique (320) disposé à l'intérieur du diffuseur.

12. Appareil selon l'une quelconque des revendications précédentes, dans lequel la source de lumière à semi-conducteur est une diode électroluminescente.

13. Appareil selon l'une quelconque des revendications précédentes, dans lequel le diffuseur est construit à partir d'au moins un élément parmi les suivants : un verre, une céramique et un polycarbonate et/ou les éléments optiques sont construits à partir d'au moins un élément parmi les suivants : un verre et un polycarbonate.
